# EUROPÄISCHE PATENTSCHRIFT

(11) **EP 1 884 391 B1**
(45) Veröffentlichungstag und Bekanntmachung des Hinweises auf die Patenterteilung: **02.04.2014**
(21) Anmeldenummer: 07010757.8
(22) Anmeldetag: 31.05.2007
(51) Int. Cl.: B60J 7/22

(54) **Rollovorrichtung sowie Windschott und Kraftfahrzeug mit einer Rollovorrichtung**
Roller blind device and wind blocker and motor vehicle with a roller blind device
Dispositif de store tout comme pare-vent et véhicule automobile doté d'un tel dispositif de store

(30) Priorität: 26.07.2006 DE 102006034446
(43) Veröffentlichungstag der Anmeldung: 06.02.2008
(73) Patentinhaber: Dr. Ing. h.c. F. Porsche AG, 70435 Stuttgart (DE)
(72) Erfinder: Beierl, Dominik, 70825 Korntal-Münchingen (DE); Hermann, Felix, 71229 Leonberg (DE)

(56) Entgegenhaltungen:
- WO-A2-2005/080105
- DE-C1- 4 037 705
- DE-U1- 9 206 644

## Beschreibung

Die vorliegende Erfindung betrifft eine Rollovorrichtung sowie ein Windschott und ein Kraftfahrzeug mit einer solchen Rollovorrichtung.

Aus der DE 197 25 217 C1 ist ein Windschott für ein Kraftfahrzeug bekannt. Dieses Windschott weist eine Rollovorrichtung auf, die ein flexibles Flächengebilde enthält. Das flexible Flächengebilde ist für eine Ruhestellung des Windschotts auf eine Rolloachse aufrollbar und für eine Wirkstellung des Windschotts von dieser abrollbar. Die Rolloachse ist heckseitig ortsfest in dem Kraftfahrzeug angeordnet. Das Flächengebilde ist mit einer Stirnkante an der Rolloachse und mit einer anderen Stirnkante an einem Querelement eines verschwenkbaren Aufspannbügels befestigt. Bei dem Windschott ist ein Umlenkträger gelenkig an dem Aufspannbügel befestigt. Der Umlenkträger weist ein Querelement auf, das als Umlenkung für das auf- und abrollbare Flächengebilde dient. Zum Verschwenken des Windschotts in seine Wirkstellung wird der Umlenkträger horizontal mittels einer Art Scherengelenk verschoben. Diese Bewegung überträgt sich auf den Aufspannbügel. Dadurch stellen sich sowohl der Umlenkträger als auch der an ihm befestigte Aufspannbügel auf. Das Verschwenken von Umlenkträger und Aufspannbügel bewirkt das Abrollen des Flächengebildes. Das Verschwenken des Windschotts in seine Ruhestellung erfolgt auf umgekehrtem Weg durch horizontales Verfahren des Umlenkträgers in die entgegengesetzte Richtung. Ein Antrieb des Windschotts mittels eines solchen Scherengelenks ist aufwändig zu realisieren und benötigt viel Raum.

Es ist die Aufgabe der vorliegenden Erfindung, eine Rollovorrichtung zu ermöglichen, die auf technisch einfache Weise realisiert werden kann.

Diese Aufgabe wird durch eine Rollovorrichtung gemäß der technischen Lehre des Anspruchs 1, ein Windschott gemäß der technischen Lehre des Anspruchs 7 oder ein Kraftfahrzeug gemäß der technischen Lehre des Anspruchs 12 gelöst. Vorteilhafte Ausgestaltungen der Erfindung können den abhängigen Ansprüchen entnommen werden.

Erfindungsgemäß weist die Rollovorrichtung ein erstes flexibles Flächengebilde und ein zweites flexibles Flächengebilde auf, die beide an einer drehbaren Rolloachse so befestigt und angeordnet sind, dass sie auf die Rolloachse aufwickelbar und in unterschiedliche Richtungen von der Rolloachse abwickelbar sind. Die beiden Flächengebilde sind insbesondere für eine Ruhestellung der Rollovorrichtung auf die Rolloachse aufwickelbar und für eine Wirkstellung der Rollovorrichtung von der Rolloachse abwickelbar. In der Wirkstellung spannen die beiden Flächengebilde Wirkflächen auf, die als Schutzflächen dienen können. In der Ruhestellung spannen die beiden Flächengebilde keine solchen Wirkflächen auf.

Aufgrund der vorliegenden Erfindung kann eine Rollovorrichtung realisiert werden, die eine geringe Anzahl von Bauteilen aufweist und damit kostengünstig hergestellt und montiert werden kann. Die erfindungsgemäße Rollovorrichtung kann auf einfache Weise für unterschiedliche Anwendungszwecke eingesetzt werden. Eine Anpassung der Rollovorrichtung an diese Anwendungszwecke ist besonders leicht möglich. Eine einzige Rolloachse ist vorteilhafterweise für beide Flächengebilde ausreichend. Besonders vorteilhaft können die beiden Flächengebilde gleichzeitig von der Rolloachse ab- und/oder auf sie aufgewickelt werden. Das Einstellen der Wirk- bzw. der Ruhestellung kann dadurch schnell erfolgen.

In einer vorteilhaften Ausgestaltung der Erfindung sind das erste Flächengebilde und das zweite Flächengebilde in der Ruhestellung der Rollovorrichtung übereinander liegend auf der Rolloachse aufgewickelt. Die beiden Flächengebilde sind insbesondere doppelt auf der Rolloachse aufgewickelt. Sie befinden sie sich in der Ruhestellung parallel zueinander und spiralförmig aufgewickelt auf der Rolloachse. Dadurch ist ein kompaktes Anordnen beider Flächengebilde auf der Rolloachse möglich.

Vorzugsweise sind eine Stirnkante des ersten Flächengebildes und eine Stirnkante des zweiten Flächengebildes an der Rolloachse und eine andere Stirnkante des ersten Flächengebildes an einer ersten Verstrebung und eine andere Stirnkante des zweiten Flächengebildes an einer zweiten Verstrebung befestigt. Gerade die Stirnkanten lassen sich besonders gut und fest an der Rolloachse und den beiden Verstrebungen befestigen. Ferner können dadurch die beiden Flächengebilde besonders effizient ausgenutzt werden. Der Materialaufwand zum Aufspannen der Wirkflächen kann gering gehalten werden, da keine Bereiche der Flächengebilde über die Verstrebungen hinaus überlappen.

In einer weiteren vorteilhaften Ausgestaltung sind die erste Verstrebung und/oder die zweite Verstrebung zum Ab- und Aufwickeln des ersten Flächengebildes bzw. des zweiten Flächengebildes von der Rolloachse verfahrbar. Dies ermöglicht das Abwickeln und Aufwickeln der Flächengebilde auf besonders einfache und zuverlässige Weise.

In einer besonders bevorzugten Ausgestaltung der Erfindung ist die erste Verstrebung oder die zweite Verstrebung ortsfest gelagert. Die Rolloachse ist ferner zum Ab- und Aufwickeln des ersten Flächengebildes bzw. des zweiten Flächengebildes von der Rolloachse verfahrbar. Dadurch kann für bestimmte Anwendung ebenfalls ein einfaches und zuverlässiges Auf- und Abwickeln der Flächengebilde ermöglicht werden.

Besonders vorteilhaft weisen das erste Flächengebilde und das zweite Flächengebilde jeweils einen netzförmigen Stoff auf. Dieser ist besonders flexibel und lässt sich somit besonders gut auf- und abrollen. Ferner lässt sich der Stoff gut spannen, so dass die mit ihm aufgespannten Wirkflächen einen besonders guten Schutz bieten.

Bevorzugt weist das erfindungsgemäße Windschott einen Aufspannbügel, der um eine in Querrichtung des Kraftfahrzeugs verlaufende, insbesondere ortsfeste Schwenkachse schwenkbar gelagert ist, und einen Spriegel auf, der um eine in Querrichtung des Kraftfahrzeugs verlaufende, insbesondere ortsfeste Schwenkachse schwenkbar gelagert ist. Die Schwenkachse des Spriegels ist dabei in Längsrichtung des Kraftfahrzeugs von der Schwenkachse des Aufspannbügels beabstandet. Ferner ist die Rolloachse an dem Spriegel parallel zu seiner Schwenkachse ausgebildet. Ein Verschwenken des Windschotts zwischen einer Ruhestellung, in der es insbesondere im Wesentlichen auf Höhe einer Gürtellinie des Kraftfahrzeugs liegt und keinen Windschutz gewährleistet, und einer Wirkstellung, in der es eine im Wesentlichen vertikale Ausrichtung hat und einen Windschutz gewährleistet, ist somit auf besonders einfache Weise möglich. Durch die getrennte und ortsfeste Lagerung von Aufspannbügel und Spriegel können deren Formen und Dimensionen vorteilhafterweise weitgehend unabhängig voneinander ausgestaltet werden. Ferner ist eine besonders gute Stabilität und Zuverlässigkeit der Anordnung gegeben. Der Aufspannbügel und der Spriegel sind insbesondere zum Ausführen einer rotierenden Bewegung gelagert. Vorteilhafterweise ist die Schwenkachse des Aufspannbügels in Vorwärtsfahrtrichtung des Kraftfahrzeugs vor der Schwenkachse des Spriegels angeordnet.

Besonders bevorzugt ist die Rolloachse an einem parallel zu der Schwenkachse des Spriegels verlaufenden Quersteg des Spriegels ausgebildet. Dies ermöglicht eine besonders Platz sparende Ausgestaltung des Windschotts.

Bevorzugt ist das erste Flächengebilde an dem Aufspannbügel befestigt und das zweite Flächengebilde an dem Kraftfahrzeug, insbesondere in einem Heckbereich des Kraftfahrzeugs, ortsfest befestigt. Dadurch spannt das erste Flächengebilde in der Wirkstellung des Windschotts zwischen der Befestigung an dem Aufspannbügel und der an dem Spriegel ausgebildeten Rolloachse eine Wirkfläche auf, die als Windschutz dient. Das erste Flächengebilde verläuft in diesem Fall vorteilhafterweise weitgehend vertikal. Das zweite Flächengebilde spannt zwischen der an dem Spriegel ausgebildeten Rolloachse und der ortsfesten Befestigung an dem Kraftfahrzeug eine Abdeckfläche auf, die vorteilhafterweise z. B. als Abdeckung für einen Fondbereich des Kraftfahrzeugs oder einen Verdeckkasten eines Cabriolets dienen kann. Das zweite Flächengebilde verläuft in diesem Fall vorteilhafterweise weitgehend horizontal.

Besonders bevorzugt sind eine Stirnkante des ersten Flächengebildes und eine Stirnkante des zweiten Flächengebildes an der Rolloachse und eine andere Stirnkante des ersten Flächengebildes an einem Quersteg des Aufspannbügels und eine andere Stirnkante des zweiten Flächengebildes ortsfest an dem Kraftfahrzeug befestigt. Die Stirnkanten lassen sich besonders gut und fest an der Rolloachse und den beiden Verstrebungen befestigen. Ferner kann der Materialaufwand zum Aufspannen der Wirkfläche des Windschotts gering gehalten werden.

Das erfindungsgemäße Kraftfahrzeug hat vorzugsweise eine durchsichtige Fläche, insbesondere eine Glasfläche. Die Rollovorrichtung ist ferner so angeordnet und ausgestaltet, dass sie in ihrer Wirkstellung die durchsichtige Fläche zumindest teilweise abdeckt. Die erfindungsgemäße Rollovorrichtung kann daher beispielsweise als einfach ausgestalteter und zuverlässiger Licht- und Sonnenschutz für das Kraftfahrzeug dienen.

Bevorzugt weist ein Dach des Kraftfahrzeugs die durchsichtige Fläche auf. Ein solches Dach bietet einem in dem Kraftfahrzeug sitzenden Passagier ein gutes und offenes Fahrgefühl, setzt ihn allerdings unter Umständen insbesondere einer starken Sonneneinstrahlung aus. Durch die Anordnung der Rollovorrichtung kann der Passagier vor dieser Sonneneinstrahlung besonders einfach und gut geschützt werden. Dazu ist die Rollovorrichtung vorteilhafterweise unterhalb des Dachs angeordnet.

Besonders vorteilhaft ist die Rolloachse an einem Dachholm des Dachs ausgebildet. Dieser kann daher sowohl zur Stabilität des Dachaufbaus als auch zum Auf- und Abwickeln des Flächengebildes dienen.

Vorzugsweise ist die Rollovorrichtung so angeordnet und ausgestaltet, dass das erste Flächengebilde in Richtung einer Windschutzscheibe und das zweite Flächengebilde in Richtung eines Hecks des Kraftfahrzeugs von der Rolloachse abwickelbar ist. Die Rolloachse kann dazu in Längsrichtung des Kraftfahrzeugs insbesondere in der Mitte des Daches angeordnet sein. Die Flächengebilde können dazu in etwa gleich groß ausgebildet sein. Die von dem ersten Flächengebilde aufgespannte Wirkfläche deckt somit eine Teilfläche des Dachs in Richtung der Windschutzscheibe ab und die von dem zweiten Flächengebilde aufgespannte Wirkfläche eine Teilfläche des Dachs in Richtung des Hecks des Kraftfahrzeugs.

Besonders vorteilhaft sind eine Stirnkante des ersten Flächengebildes und eine Stirnkante des zweiten Flächengebildes an der Rolloachse und eine andere Stirnkante des ersten Flächengebildes an einer ersten, verfahrbaren Verstrebung und eine andere Stirnkante des zweiten Flächengebildes an einer zweiten, verfahrbaren Verstrebung befestigt. Die Stirnkanten lassen sich besonders gut und fest an der Rolloachse und den beiden Verstrebungen befestigen. Ferner kann der Materialaufwand zum Aufspannen der Wirkfläche des Windschotts gering gehalten werden.

Weitere Vorteile und vorteilhafte Ausgestaltungen der Erfindung ergeben sich aus der folgenden Beschreibung von bevorzugten Beispielen und Ausführungsbeispielen unter Bezugnahme auf die beigefügten Zeichnungen. Es zeigen:
- Fig. 1: eine schematische, perspektivische Darstellung eines Ausführungsbeispiels eines in einem erfindungsgemäßen Cabriolet eingesetzten erfindungsgemäßen Windschotts mit einer erfindungsgemäßen Rollovorrichtung, deren Rolloachse an einem Spriegel angeordnet ist,
- Fig. 2: eine schematische Schnittdarstellung des Windschotts nach Fig. 1 und
- Fig. 3: ein Ausführungsbeispiel eines erfindungsgemäßen Kraftfahrzeugs mit einer unterhalb einer Glasfläche eines Dachs angeordneten erfindungsgemäßen Rollovorrichtung.

Im Folgenden werden für gleiche oder gleichwirkende Elemente gleiche Bezugszeichen verwendet.

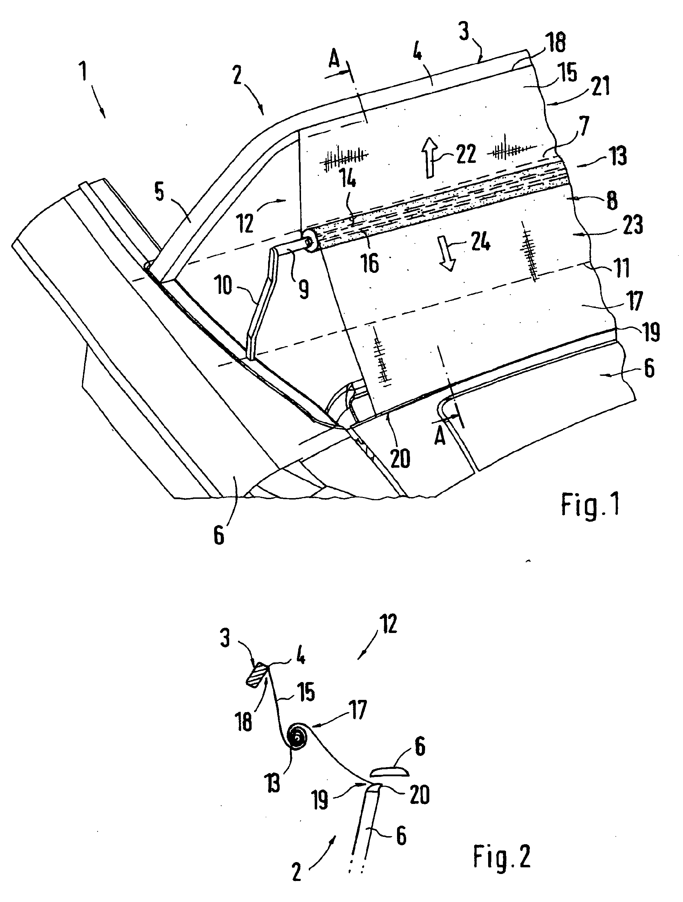

Fig. 1 zeigt eine schematische, perspektivische Darstellung eines Teils eines erfindungsgemäßen Cabriolets 1, der zwischen Fahrer- und Beifahrersitzen und einem Heck angeordnet ist. In diesem Teil des Cabriolets 1 ist ein erfindungsgemäßes Windschott 2 angeordnet. Das Windschott 2 ist in Querrichtung des Cabriolets 1 im Wesentlichen spiegelsymmetrisch zu einer in Längsrichtung durch seine Mitte verlaufenden Achse aufgebaut. In der Fig. 1 ist daher aus Gründen der Übersichtlichkeit nur der linke, seitliche Teil des Cabriolets 1 und ein linker Teil des Windschotts 2 gezeigt. Das Windschott 2 enthält einen Aufspannbügel 3, der zwei voneinander beabstandete, sich gegenüber liegende Seitenholme enthält, die durch einen Quersteg 4, vorteilhafterweise einstückig, miteinander verbunden sind. Die Fig. 1 zeigt einen linken Seitenholm 5 des Aufspannbügels 3. Der Aufspannbügel 3 ist ortsfest und verschwenkbar in sich gegenüber liegenden, seitlichen Bereichen einer Karosserie 6 des Cabriolets 1 gelagert. Der Aufspannbügel 3 ist somit um eine sich in Querrichtung erstreckende, ortsfeste Schwenkachse 7 schwenkbar an der Karosserie 6 gelagert. Die Schwenkachse 7 verläuft parallel zu dem Quersteg 4 des Aufspannbügels 3.

Das Windschott 2 enthält ferner einen hier bügelförmig ausgestalteten Spriegel 8, der zwei voneinander beabstandete, sich gegenüber liegende Seitenholme enthält, die durch einen Quersteg 9, vorteilhafterweise einstückig, miteinander verbunden sind. Die Fig. 1 zeigt einen linken Seitenholm 10 des Spriegels 8. Der Spriegel 8 ist ortsfest und verschwenkbar in den sich gegenüber liegenden, seitlichen Bereichen der Karosserie 6 des Cabriolets 1 gelagert. Der Spriegel 8 ist somit um eine sich in Querrichtung erstreckende, ortsfeste Schwenkachse 11 schwenkbar an der Karosserie gelagert. Die Schwenkachse 11 verläuft parallel zu dem Quersteg 9 des Spriegels 8. Die Schwenkachse 7 des Aufspannbügels 3 und die Schwenkachse 11 des Spriegels 8 sind in Längsrichtung des Cabriolets 1 voneinander beabstandet. Im vorliegenden Ausführungsbeispiel ist die Schwenkachse 11 in Vorwärts-Fahrtrichtung des Cabriolets 1 hinter der Schwenkachse 7 ausgebildet.

Das Windschott 2 kann eine Ruhestellung einnehmen, in der es in Längsrichtung des Cabriolets 1 nach hinten abgelegt ist und keine Wirkfläche zum Schutz vor Wind aufspannt. Der Aufspannbügel 3 und der Spriegel 8 sind dann nach hinten verschwenkt und liegen im Wesentlichen auf der Höhe einer Gürtellinie des Cabriolets 1. Der Aufspannbügel 3 liegt dabei auf dem Spriegel 8 auf. In einer Wirkstellung des Windschotts 2 spannt es eine Wirkfläche zum Schutz eines Passagierraums des Cabriolets 1 vor Wind auf. In der Wirkstellung ist der Aufspannbügel 3 ausgehend von der Ruhestellung um ca. 90° nach oben verschwenkt, so dass sich seine Seitenholme nahezu vertikal nach oben erstrecken. Der Spriegel 8 ist ausgehend von der Ruhestellung um ca. 180° nach vorne verschwenkt, so dass er im Wesentlichen auf der Höhe der Gürtellinie des Cabriolets 1 liegt, wobei seine Seitenholme nahezu horizontal verlaufen und der Quersteg 9 in Vorwärts-Fahrtrichtung vor der Schwenkachse 11 liegt. Der Aufspannbügel 3 und der Spriegel 8 können mit Antrieben verbunden sein, mit denen sie um ihre jeweilige Schwenkachse 7 bzw. 11 verschwenkt werden können. Aufspannbügel 3 und Spriegel 8 können aber ebenso mit einem Kopplungsmechanismus miteinander verbunden sein, so dass nur einer von beiden, oder der Kopplungsmechanismus, angetrieben werden muss und sich diese Antriebsbewegung auf die jeweilige andere Komponente überträgt. Der Antrieb kann beispielsweise ein motorischer Antrieb mit einem Elektromotor oder ein hydraulischer Antrieb sein.

Zum Aufspannen von Wirkflächen, die in der Wirkstellung des Windschotts 2 einen Schutz gewährleisten, weist dieses eine Rollovorrichtung 12 auf. Die Rollovorrichtung 12 enthält eine drehbar gelagerte Rolloachse 13, die an dem Quersteg 9 des Spriegels 8 ausgebildet ist. An der Rolloachse 13 sind eine Stirnkante 14 einer ersten Netzplane 15 und eine Stirnkante 16 einer zweiten Netzplane 17 befestigt. Eine andere Stirnkante 18 der Netzplane 15 ist an dem Quersteg 4 des Aufspannbügels 3 und eine andere Stirnkante 19 der Netzplane 17 an einer Verstrebung 20 der Karosserie 6 im Heckbereich des Cabriolets 1 befestigt. Die erste Netzplane 15 und die zweite Netzplane 17 der Rollovorrichtung 12 sind hier flächig ausgestaltete, flexible Flächengebilde aus netzförmigen Stoffen. Die beiden Netzplanen 15, 17 können mittels der drehbaren Rolloachse 13 auf diese auf- und von dieser abgewickelt werden. In der Ruhestellung des Windschotts 2, die einer Ruhestellung der Rollovorrichtung 12 entspricht, sind die beiden Netzplanen 15, 17 in ihrem aufgerollten Zustand übereinander liegend auf der Rolloachse 13 aufgewickelt. Die beiden Netzplanen 15, 17 sind spiralförmig auf die Rolloachse 13 aufgewickelt.

Beim Verstellen des Windschotts 2 von seiner Ruhe- in seine Wirkstellung, die einer Wirkstellung der Rollovorrichtung 12 entspricht, dreht sich die Rolloachse 13 durch das Verschwenken des Aufspannbügels 3 und des Spriegels 8. Die Netzplanen 15, 17 rollen dabei in unterschiedliche Richtungen von der Rolloachse 13 ab. Die Netzplane 15 spannt beim Verschwenken des Windschotts 2 in seine Wirkstellung eine Wirkteilfläche 21 auf. Dies ist in der Fig. 1 durch einen Pfeil 22 angedeutet. Der Pfeil 22 gibt die Richtung an, in die die Netzplane 15 von der Rolloachse 13 abgewickelt wird. Die Netzplane 17 spannt gleichzeitig die Wirkteilfläche 23 auf. Dies ist in der Fig. 1 durch einen Pfeil 24 angedeutet. Der Pfeil 24 gibt die Richtung an, in die die Netzplane 17 von der Rolloachse 13 abgewickelt wird. In der vollständigen Wirkstellung des Windschotts 2 ist der Aufspannbügel 3 im Wesentlichen vertikal nach oben verschwenkt und der Spriegel 8 um nahezu 180° nach vorne, so dass er erneut horizontal auf der Höhe der Gürtellinie des Cabriolets 1 aufliegt. Der Quersteg 9 des Spriegels 8 liegt dann in etwa unterhalb des Querstegs 4 des Aufspannbügels 3. Die Wirkteilfläche 21 gewährleistet einen guten Windschutz und erstreckt sich von dem Quersteg 4 bis zu dem Quersteg 9. Sie deckt dabei, abhängig von eventuellen Neigungen der Seitenholme des Aufspannbügels 3 nach innen und der Breite der Netzplane 15 in Querrichtung, eine nahezu komplette von dem Aufspannbügel 3 aufgespannte Fläche ab. Die Wirkfläche 23 erstreckt sich von dem in Höhe der Gürtellinie des Cabriolets 1 befindlichen Quersteg 9 bis zu der Verstrebung 20. Die Wirkteilfläche 23 gewährleistet eine Abdeckung eines unter ihr liegenden Raums. Dieser Raum ist hier ein Fondraum des Cabriolets 1. Die Wirkteilfläche 23 gewährleistet somit einen Schutz des unter ihr liegenden Raums vor schädlichen äußeren Einflüssen. In der Fig. 1 ist ein Schnitt A-A durch das Windschott 2 eingezeichnet.

Fig. 2 zeigt eine schematische Darstellung des Schnitts A-A nach Fig. 1. In dieser Schnittdarstellung ist die doppelte Aufwicklung der beiden übereinander liegenden Netzplanen 15 und 17 auf dem als Rolloachse 13 ausgestalteten Quersteg 9 des Spriegels 8 zu sehen. Die Stirnkante 18 der Netzplane 15 ist an dem Quersteg 4 des Aufspannbügels 3 und die Stirnkante 19 der Netzplane 17 zusätzlich an der Verstrebung 20 befestigt. Dadurch werden die beiden Netzplanen 15, 17 beim Verschwenken des Windschotts 2 automatisch von der Rolloachse 13 abgerollt. Der Aufrollvorgang zum Aufrollen der abgerollten Netzplanen 15, 17 erfolgt in umgekehrter Weise. Dabei werden die beiden Netzplanen 15, 17 wieder übereinander liegend auf die Rolloachse 13 aufgerollt.

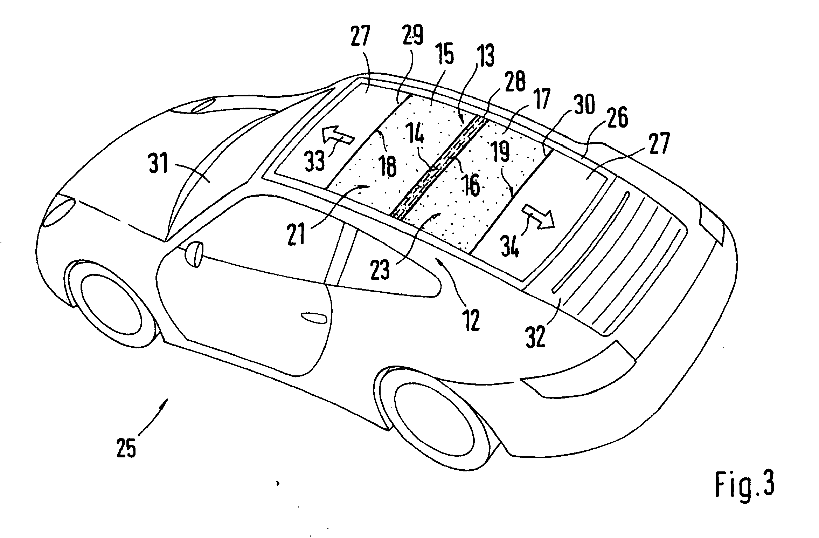

Fig. 3 zeigt ein weiteres Ausführungsbeispiel eines erfindungsgemäßen Kraftfahrzeugs. Das Kraftfahrzeug ist hier ein geschlossenes Kraftfahrzeug 25 mit einem durchsichtigen Dach 26, das hier ein Glasdach mit einer Glasfläche 27 ist. Unterhalb der Glasfläche 27 ist die erfindungsgemäße Rollovorrichtung 12 angeordnet. Die Rollovorrichtung 12 weist die drehbare Rolloachse 13 auf, die hier an einem in Querrichtung verlaufenden Dachholm 28 des Kraftfahrzeugs 25 ausgebildet ist. Der Dachholm 28 ist hier ortsfest an der Karosserie 6 des Kraftfahrzeugs 25 angeordnet. An der Rolloachse 13 sind die Stirnkanten 14 und 16 der beiden Netzplanen 15 bzw. 17 befestigt. Die andere Stirnkante 18 der Netzplane 15 ist an einer Verstrebung 29 und die andere Stirnkante 19 der Netzplane 17 an einer Verstrebung 30 befestigt. Die Verstrebungen 29 und 30 verlaufen in Querrichtung des Kraftfahrzeugs 25 und sind in Längsrichtung des Kraftfahrzeugs 25 verschiebbar unterhalb des Dachs 26 angeordnet. Die Verstrebung 29 ist dabei in Vorwärts-Fahrtrichtung vor und die Verstrebung 30 hinter dem Dachholm 28 angeordnet. Die Verstrebung 29 ist im Wesentlichen zwischen dem Dachholm 28 und einem, in Vorwärts-Fahrtrichtung betrachtet, vorderen Ende der Glasfläche 27 verfahrbar. Das vordere Ende der Glasfläche 27 ist dabei einer Windschutzscheibe 31 des Kraftfahrzeugs 25 benachbart. Die Verstrebung 30 ist im Wesentlichen zwischen dem Dachholm 28 und einem, in Vorwärts-Fahrtrichtung betrachtet, hinteren Ende der Glasfläche 27 verfahrbar. Das hintere Ende der Glasfläche 27 ist dabei einem Heck 32 des Kraftfahrzeugs 25 benachbart.

In der Ruhestellung der Rollovorrichtung 12 liegen die beide Verstrebungen 29, 30 an dem Dachholm 28 mit der Rolloachse 13 an. Die Glasfläche 27 ist dann zum Passagierraum hin offen und nicht durch die Rollovorrichtung 12 abgedeckt. Zum Aufspannen der Wirkteilfläche 21 durch die Netzplane 15 wird die Verstrebung 29, ausgehend von der Ruhestellung der Rollovorrichtung 12, in Richtung der Windschutzscheibe 31 verfahren. Dies ist in der Fig. 3 durch einen Pfeil 33 verdeutlicht. Zum Aufspannen der Wirkteilfläche 23 durch die Netzplane 17 wird die Verstrebung 30, ausgehend von der Ruhestellung der Rollovorrichtung 12, in Richtung des Hecks 32 verfahren. Dies ist in der Fig. 3 durch einen Pfeil 34 verdeutlicht. Im vorliegenden Ausführungsbeispiel sind die durch den Pfeil 33 angegebene Richtung und die durch den Pfeil 34 angegebene Richtung im Wesentlichen zueinander entgegengesetzt. In der Wirkstellung der Rollovorrichtung 12 sind die beiden Wirkteilflächen 21, 23 vollständig aufgespannt und decken annähernd die gesamte Glasfläche 27 ab. Die beiden Netzplanen 15, 17 haben somit eine Größe, die an die Größe der Glasfläche 27 angepasst ist. Die Breite der Netzplanen 15, 17 in Querrichtung entspricht annähernd der Breite der Glasfläche 27 und die Länge der Netzplanen 15, 17 in Längsrichtung entspricht annähernd der halben Länge der Glasfläche 27. Die Rolloachse 13 ist dazu, in Längsrichtung betrachtet, in der Mitte der Glasfläche 27 angeordnet. In der Fig. 3 ist eine Zwischenstellung der Rollovorrichtung 12 zwischen ihrer Ruhestellung und ihrer Wirkstellung dargestellt. Die beiden Netzplanen 15, 17 sind teilweise von der Rolloachse 13 abgewickelt und decken einen Teil der Glasfläche 27 ab. Die beiden Netzplanen 15, 17 sind in der Ruhestellung übereinander liegend auf der Rolloachse 13 aufgewickelt. Zum Verfahren der Rollovorrichtung 12 in ihre Wirkstellung werden beide Netzplanen 15, 17 gleichzeitig von der Rolloachse 13 abgewickelt. Dazu ist ein Antrieb vorgesehen, der an den Verstrebungen 29 und 30 angreift und diese in Richtung der Windschutzscheibe 31 bzw. des Hecks 32 verfährt. Zum Verfahren der Rollovorrichtung 12 von ihrer Wirkstellung in ihre Ruhestellung werden die beiden Verstrebungen 29, 30 in Richtung des Dachholms 28 verfahren. Die beiden Netzplanen 15, 17 werden dabei übereinander liegend auf die Rolloachse 13 aufgewickelt. Vorteilhafterweise können die Netzplanen 15, 17 stufenlos von der Rolloachse 13 ab- und auf sie aufgewickelt werden. Dadurch ist jede beliebige Zwischenstellung zwischen der Ruhestellung und der Wirkstellung der Rollovorrichtung 12 zum Abdecken zumindest eines Teils der Glasfläche 27 einstellbar.

Im Ausführungsbeispiel nach Fig. 3 ist die Rolloachse 13 ortsfest an dem Dachholm 28 ausgebildet. Es ist allerdings ebenso möglich, eine der Verstrebungen 29 oder 30 ortsfest an dem Kraftfahrzeug 25 anzuordnen und die andere der Verstrebungen 30 bzw. 29 und die Rolloachse 13 verfahrbar unterhalb des Dachs 26 auszubilden.

## Patentansprüche

1. Rollovorrichtung (12), insbesondere für ein Kraftfahrzeug (1, 25), mit einem ersten flexiblen Flächengebilde (15) und einem zweiten flexiblen Flächengebilde (17), die beide an einer drehbaren Rolloachse (13) so befestigt und angeordnet sind, dass sie auf die Rolloachse (13) aufwickelbar und in unterschiedliche Richtungen (22, 24; 33, 34) von der Rolloachse (13) abwickelbar sind.

2. Rollovorrichtung nach Anspruch 1, **dadurch gekennzeichnet, dass** das erste Flächengebilde (15) und das zweite Flächengebilde (17) in einer Ruhestellung der Rollovorrichtung (12) übereinander liegend auf der Rolloachse (13) aufgewickelt sind.

3. Rollovorrichtung nach Anspruch 1 oder 2, **dadurch gekennzeichnet, dass** eine Stirnkante (14) des ersten Flächengebildes (15) und eine Stirnkante (16) des zweiten Flächengebildes (17) an der Rolloachse (13) und eine andere Stirnkante (18) des ersten Flächengebildes (15) an einer ersten Verstrebung (4; 29) und eine andere Stirnkante (19) des zweiten Flächengebildes (17) an einer zweiten Verstrebung (20; 30) befestigt sind.

4. Rollovorrichtung nach Anspruch 3, **dadurch gekennzeichnet, dass** die erste Verstrebung (4; 29) und/oder die zweite Verstrebung (20; 30) zum Ab- und Aufwickeln des ersten Flächengebildes (15) bzw. des zweiten Flächengebildes (17) von der Rolloachse (13) verfahrbar sind.

5. Rollovorrichtung nach Anspruch 3 oder 4, **dadurch gekennzeichnet, dass** die erste Verstrebung (29) oder die zweite Verstrebung (30) ortsfest gelagert ist und die Rolloachse (13) zum Ab- und Aufwickeln des ersten Flächengebildes (15) bzw. des zweiten Flächengebildes (17) von der Rolloachse (13) verfahrbar ist.

6. Rollovorrichtung nach einem der vorhergehenden Ansprüche, **dadurch gekennzeichnet, dass** das erste Flächengebilde (15) und das zweite Flächengebilde (17) jeweils einen netzförmigen Stoff aufweisen.

7. Windschott für ein Kraftfahrzeug (1) mit einer Rollovorrichtung (12) nach einem der vorhergehenden Ansprüche.

8. Windschott nach Anspruch 7, **dadurch gekennzeichnet, dass** es einen Aufspannbügel (3), der um eine in Querrichtung des Kraftfahrzeugs (1) verlaufende, insbesondere ortsfeste Schwenkachse (7) schwenkbar gelagert ist, und einen Spriegel (8) aufweist, der um eine in Querrichtung des Kraftfahrzeugs (1) verlaufende, insbesondere ortsfeste Schwenkachse (11) schwenkbar gelagert ist, die in Längsrichtung des Kraftfahrzeugs (1) von der Schwenkachse (7) des Aufspannbügels (3) beabstandet ist, und die Rolloachse (13) an dem Spriegel (8) parallel zu dessen Schwenkachse (11) ausgebildet ist.

9. Windschott nach Anspruch 8, **dadurch gekennzeichnet, dass** die Rolloachse (13) an einem parallel zu der Schwenkachse (11) des Spriegels (8) verlaufenden Quersteg (9) des Spriegels (8) ausgebildet ist.

10. Windschott nach Anspruch 9, **dadurch gekennzeichnet, dass** das erste Flächengebilde (15) an dem Aufspannbügel (3) befestigt und das zweite Flächengebilde (17) an dem Kraftfahrzeug (1), insbesondere in einem Heckbereich des Kraftfahrzeugs (1), ortsfest befestigt ist.

11. Windschott nach Anspruch 10, **dadurch gekennzeichnet, dass** eine Stirnkante (14) des ersten Flächengebildes (15) und eine Stirnkante (16) des zweiten Flächengebildes (17) an der Rolloachse (13) und eine andere Stirnkante (18) des ersten Flächengebildes (15) an einem Quersteg (4) des Aufspannbügels (3) und eine andere Stirnkante (19) des zweiten Flächengebildes (17) ortsfest an dem Kraftfahrzeug (1) befestigt sind.

12. Kraftfahrzeug (1, 25) mit einer Rollovorrichtung (12) nach einem der Ansprüche 1-6.

13. Kraftfahrzeug nach Anspruch 12, **dadurch gekennzeichnet, dass** das Kraftfahrzeug (25) eine durchsichtige Fläche (27) aufweist und die Rollovorrichtung (12) so angeordnet und ausgestaltet ist, dass sie in ihrer Wirkstellung die durchsichtige Fläche (27) zumindest teilweise abdeckt.

14. Kraftfahrzeug nach Anspruch 13, **dadurch gekennzeichnet, dass** die durchsichtige Fläche (27) eine Glasfläche aufweist.

15. Kraftfahrzeug nach Anspruch 13 oder 14, **dadurch gekennzeichnet, dass** ein Dach (26) des Kraftfahrzeugs (25) die durchsichtige Fläche (27) aufweist.

16. Kraftfahrzeug nach Anspruch 15, **dadurch gekennzeichnet, dass** die Rolloachse (13) an einem Dachholm (28) des Dachs (26) ausgebildet ist.

17. Kraftfahrzeug nach einem der Ansprüche 12-16, **dadurch gekennzeichnet, dass** die Rollovorrichtung (12) so angeordnet und ausgestaltet ist, dass das erste Flächengebilde (15) in Richtung einer Windschutzscheibe (31) und das zweite Flächengebilde (17) in Richtung eines Hecks (32) des Kraftfahrzeugs (25) von der Rolloachse (13) abwickelbar ist.

18. Kraftfahrzeug nach Anspruch 17, **dadurch gekennzeichnet, dass** eine Stirnkante (14) des ersten Flächengebildes (15) und eine Stirnkante (16) des zweiten Flächengebildes (17) an der Rolloachse (13) und eine andere Stirnkante (18) des ersten Flächengebildes (15) an einer ersten, verfahrbaren Verstrebung (29) und eine andere Stirnkante (19) des zweiten Flächengebildes (17) an einer zweiten, verfahrbaren Verstrebung (30) befestigt sind.

## Claims

1. Roller blind device (12), in particular for a motor vehicle (1, 25), with a first flexible sheet-like structure (15) and a second flexible sheet-like structure (17), which are both fastened to and arranged on a rotatable roller blind spindle (13) in such a manner that they can be wound up onto the roller blind spindle (13) and can be unwound from the roller blind spindle (13) in different directions (22, 24; 33, 34).

2. Roller blind device according to Claim 1, **characterized in that**, in an inoperative position of the roller blind device (12), the first sheet-like structure (15) and the second sheet-like structure (17) are wound up on the roller blind spindle (13) in a manner lying one above the other.

3. Roller blind device according to Claim 1 or 2, **characterized in that** an end edge (14) of the first sheet-like structure (15) and an end edge (16) of the second sheet-like structure (17) are fastened to the roller blind spindle (13), and another end edge (18) of the first sheet-like structure (15) is fastened to a first cross strut (4; 29) and another end edge (19) of the second sheet-like structure (17) is fastened to a second cross strut (20; 30).

4. Roller blind device according to Claim 3, **characterized in that** the first cross strut (4; 29) and/or the second cross strut (20; 30) are movable in order to unwind and wind the first sheet-like structure (15) and/or the second sheet-like structure (17) from or onto the roller blind spindle (13).

5. Roller blind device according to Claim 3 or 4, **characterized in that** the first cross strut (29) or the second cross strut (30) is mounted in a positionally fixed manner, and the roller blind spindle (13) is movable in order to unwind and wind the first sheet-like structure (15) and/or the second sheet-like structure (17) from or onto the roller blind spindle (13).

6. Roller blind device according to one of the preceding claims, **characterized in that** the first sheet-like structure (15) and the second sheet-like structure (17) each comprise a material in the form of a net.

7. Wind blocker for a motor vehicle (1) with a roller blind device (12) according to one of the preceding claims.

8. Wind blocker according to Claim 7, **characterized in that** said wind blocker has a deployment bow (3) which is mounted pivotably about an, in particular positonally fixed, pivot axis (7) running in the transverse direction of the motor vehicle (1), and a stay (8) which is mounted pivotably about an, in particular positionally fixed, pivot axis (11) which runs in the transverse direction of the motor vehicle (1) and is spaced apart in the longitudinal direction of the motor vehicle (1) from the pivot axis (7) of the deployment bow (3), and the roller blind spindle (13) is formed on the stay (8) parallel to the pivot axis (11) thereof.

9. Wind blocker according to Claim 8, **characterized in that** the roller blind spindle (13) is formed on a transverse web (9) of the stay (8), said transverse web running parallel to the pivot axis (11) of the stay (8).

10. Wind blocker according to Claim 9, **characterized in that** the first sheet-like structure (15) is fastened to the deployment bow (3) and the second sheet-like structure (17) is fastened in a positionally fixed manner to the motor vehicle (1), in particular in a rear region of the motor vehicle (1).

11. Wind blocker according to Claim 10, **characterized in that** an end edge (14) of the first sheet-like structure (15) and an end edge (16) of the second sheet-like structure (17) are fastened to the roller blind spindle (13) and another end edge (18) of the first sheet-like structure (15) is fastened to a transverse web (4) of the deployment bow (3) and another end edge (19) of the second sheet-like structure (17) is fastened in a positionally fixed manner to the motor vehicle (1).

12. Motor vehicle (1, 25) with a roller blind device (12) according to one of Claims 1-6.

13. Motor vehicle according to Claim 12, **characterized in that** the motor vehicle (25) has a transparent surface (27) and the roller blind device (12) is arranged and designed in such a manner that said roller blind device, in the operative position thereof, at least partially covers the transparent surface (27).

14. Motor vehicle according to Claim 13, **characterized in that** the transparent surface (27) has a glass surface.

15. Motor vehicle according to Claim 13 or 14, **characterized in that** a roof (26) of the motor vehicle (25) has the transparent surface (27).

16. Motor vehicle according to Claim 15, **characterized in that** the roller blind spindle (13) is formed on a roof post (28) of the roof (26).

17. Motor vehicle according to one of Claims 12-16, **characterized in that** the roller blind device (12) is arranged and designed in such a manner that the first sheet-like structure (15) can be unwound from the roller blind spindle (13) in the direction of a windscreen (31) and the second sheet-like structure (17) can be unwound from the roller blind spindle (13) in the direction of a rear (32) of the motor vehicle (25).

18. Motor vehicle according to Claim 17, **characterized in that** an end edge (14) of the first sheet-like structure (15) and an end edge (16) of the second sheet-like structure (17) are fastened to the roller blind spindle (13) and another end edge (18) of the first sheet-like structure (15) is fastened to a first movable cross strut (29) and another end edge (19) of the second sheet-like structure (17) is fastened to a second movable cross strut (30).

## Revendications

1. Dispositif de store enroulable (12), en particulier pour un véhicule automobile (1, 25), comprenant une première structure plane flexible (15) et une deuxième structure plane flexible (17), toutes deux étant fixées et disposées au niveau d'un axe de store enroulable rotatif (13), de telle sorte qu'elles puissent être enroulées sur l'axe de store enroulable (13) et déroulées dans différentes directions (22, 24 ; 33, 34) depuis l'axe de store enroulable (13).

2. Dispositif de store enroulable selon la revendication 1, **caractérisé en ce que** la première structure plane (15) et la deuxième structure plane (17) sont enroulées sur l'axe de store enroulable (13) dans une position de repos du dispositif de store enroulable (12) de manière superposée l'une sur l'autre.

3. Dispositif de store enroulable selon la revendication 1 ou 2, **caractérisé en ce qu'**une arête frontale (14) de la première structure plane (15) et une arête frontale (16) de la deuxième structure plane (17) sont fixées sur l'axe de store enroulable (13) et une autre arête frontale (18) de la première structure plane (15) est fixée à une première entretoise (4 ; 29) et une autre arête frontale (19) de la deuxième structure plane (17) est fixée à une deuxième entretoise (20 ; 30).

4. Dispositif de store enroulable selon la revendication 3, **caractérisé en ce que** la première entretoise (4 ; 29) et/ou la deuxième entretoise (20 ; 30) peuvent être déplacées pour dérouler et enrouler la première structure plane (15) ou la deuxième structure plane (17) par l'axe de store enroulable (13).

5. Dispositif de store enroulable selon la revendication 3 ou 4, **caractérisé en ce que** la première entretoise (29) ou la deuxième entretoise (30) est montée fixement et l'axe de store enroulable (13) peut être déplacé pour dérouler et enrouler la première structure plane (15) ou la deuxième structure plane (17) par l'axe de store enroulable (13).

6. Dispositif de store enroulable selon l'une quelconque des revendications précédentes, **caractérisé en ce que** la première structure plane (15) et la deuxième structure plane (17) présentent chacune une étoffe en forme de filet.

7. Déflecteur de vent pour un véhicule automobile (1) comprenant un dispositif de store enroulable (12) selon l'une quelconque des revendications précédentes.

8. Déflecteur de vent selon la revendication 7, **caractérisé en ce qu'**il présente un étrier de tensionnement (3) qui est monté de manière à pouvoir pivoter autour d'un axe de pivotement (7) notamment fixe, s'étendant dans la direction transversale du véhicule automobile (1), et un arceau (8) qui est monté de manière à pouvoir pivoter autour d'un axe de pivotement (11) notamment fixe, s'étendant dans la direction transversale du véhicule automobile (1), lequel axe de pivotement est espacé, dans la direction longitudinale du véhicule automobile (1), de l'axe de pivotement (7) de l'étrier de tensionnement (3), et l'axe de store enroulable (13) est réalisé au niveau de l'arceau (8) parallèlement à son axe de pivotement (11).

9. Déflecteur de vent selon la revendication 8, **caractérisé en ce que** l'axe de store enroulable (13) est réalisé au niveau d'une nervure transversale (9) de l'arceau (8) s'étendant parallèlement à l'axe de pivotement (11) de l'arceau (8).

10. Déflecteur de vent selon la revendication 9, **caractérisé en ce que** la première structure plane (15) est fixée fixement à l'étrier de tensionnement (3) et la deuxième structure plane (17) est fixée fixement au véhicule automobile (1), en particulier dans une région arrière du véhicule automobile (1).

11. Déflecteur de vent selon la revendication 10, **caractérisé en ce qu'**une arête frontale (14) de la première structure plane (15) et une arête frontale (16) de la deuxième structure plane (17) sont fixées au niveau de l'axe de store enroulable (13) et une autre arête frontale (18) de la première structure plane (15) est fixée à une nervure transversale (4) de l'étrier de tensionnement (3) et une autre arête frontale (19) de la deuxième structure plane (17) est fixée fixement au véhicule automobile (1).

12. Véhicule automobile (1, 25) comprenant un dispositif de store enroulable (12) selon l'une quelconque des revendications 1 à 6.

13. Véhicule automobile selon la revendication 12, **caractérisé en ce que** le véhicule automobile (25) présente une surface transparente (27) et le dispositif de store enroulable (12) est disposé et configuré de telle sorte qu'il recouvre au moins partiellement dans sa position fonctionnelle la surface transparente (27).

14. Véhicule automobile selon la revendication 13, **caractérisé en ce que** la surface transparente (27) présente une surface de verre.

15. Véhicule automobile selon la revendication 13 ou 14, **caractérisé en ce qu'**un toit (26) du véhicule automobile (25) présente la surface transparente (27).

16. Véhicule automobile selon la revendication 15, **caractérisé en ce que** l'axe de store enroulable (13) est réalisé au niveau d'un longeron de toit (28) du toit (26).

17. Véhicule automobile selon l'une quelconque des revendications 12 à 16, **caractérisé en ce que** le dispositif de store enroulable (12) est disposé et configuré de telle sorte que la première structure plane (15) puisse être déroulée dans la direction d'un pare-brise (31) et que la deuxième structure plane (17) puisse être déroulée dans la direction de l'arrière (32) du véhicule automobile (25) par l'axe de store enroulable (13).

18. Véhicule automobile selon la revendication 17, **caractérisé en ce qu'**une arête frontale (14) de la première structure plane (15) et une arête frontale (16) de la deuxième structure plane (17) sont fixées à l'axe de store enroulable (13) et une autre arête frontale (18) de la première structure plane (15) est fixée à une première entretoise déplaçable (29) et une autre arête frontale (19) de la deuxième structure plane (17) est fixée à une deuxième entretoise déplaçable (30).
